# EUROPEAN PATENT SPECIFICATION

(11) **EP 2 389 528 B1**
(45) Date of publication and mention of the grant of the patent: **29.08.2018**
(21) Application number: 09804011.6
(22) Date of filing: 22.12.2009
(51) Int. Cl.: F16J 15/08, F16H 61/00

(54) **HYDRAULIC CONTROL PLATE**
HYDRAULISCHE STEUERPLATTE
PLAQUE DE COMMANDE HYDRAULIQUE

(30) Priority: 23.12.2008 DE 102008062829
(43) Date of publication of application: 30.11.2011
(73) Proprietor: REINZ-Dichtungs-GmbH, 89233 Neu-Ulm (DE)
(72) Inventor: BLERSCH, Robert, 88487 Baltringen (DE); UNSELD, Guenther, 89189 Neenstetten (DE); JUST, Volker, 89233 Neu-Ulm (DE)
(74) Representative: Pfenning, Meinig & Partner mbB
(86) International application number: PCT/EP2009/009212
(87) International publication number: WO 2010/072402

(56) References cited:
- EP-A1- 0 773 392
- EP-A1- 0 921 333
- EP-A2- 0 803 654
- WO-A1-01/96768
- US-A- 3 679 218
- US-A- 6 089 572

## Description

The invention relates to a hydraulic control plate, thus a control plate for hydraulic systems - also referred to as valve plate - comprising a first gasket layer with first sealing sections, a second gasket layer with second sealing sections and at least one plane intermediate layer arranged between the gasket layers.

A control plate for hydraulic systems with multilayer construction is known from US 5,582,415. This control plate consists of a single gasket layer with sealing sections being imprinted onto the intermediate layer.

DE 10 2007 019 946 discloses a flat gasket which comprises an intermediate layer made of filter screen material. On the surfaces of the intermediate layer opposing each other, gasket layers different from the intermediate layer are arranged. The sealing effect of these gasket layers results from elastomeric sealing lips which are molded onto the surface of these gasket layers in the sealing sections.

These gaskets provide for a sufficient sealing behaviour in hydraulic systems with low pressures, but cannot withstand the high pressures used in hydraulic systems nowadays.

EP 0 803 654 A2 discloses a filter/gasket formed of woven screen material and having beads formed of elastomeric material.

EP 0 921 333 A1 discloses a sealing structure printed on a plate, the structure including overlapping first and second sealing layers.

US 3,679,218 discloses a metal plate and gasket assembly, wherein the gasket is firmly bonded to the metal plate.

WO 01/96768, EP 0 773 392 Al and US 6,089,572 disclose flat gaskets including three layer structures.

In view of this, the invention has the object to provide a control plate for a hydraulic system of the kind mentioned above, which provides for a good sealing effect even at high pressures of the hydraulic system.

This object is achieved with a control plate for a hydraulic system of the kind mentioned above, which is characterized in that the gasket layers are made from a metallic material, and the sealing sections of said gasket layers comprise beads embossed into the gasket layers which are supported on the intermediate layer, and wherein a part of the course of the beads of the first sealing sections used for sealing a through opening and a part of the course of the corresponding beads of the second sealing sections used for sealing said through opening are offset relative to each other, thereby sealing parts on opposite sides of the control plate which have different geometries.

In the control plate for hydraulic systems according to the invention, the sealing sections are provided as beads which are formed by embossing into at least one of the gasket layers. These beads show at least one section of their material which is distanced to the intermediate plate and in its mounted state rests against the part to be sealed with pre-tension. In its section in which the bead rests against the part to be sealed, it is distanced from the intermediate layer resulting in an interspace. When compressed, this interspace provides for sufficient space in order to take up the section of the bead in contact with the part to be sealed. Compared to the state of the art, where the profile of the sealing sections is quasi rigid, this interspace allows for an improved sealing effect. As a consequence, the control plate for hydraulic systems is especially suited for hydraulic systems with high system pressures.

The metallic layers from a metallic material provide for a particularly stable control plate for hydraulic systems.

The beads can be formed as laterally closed, e.g. U-shaped, beads (full beads), and/or laterally open, e.g. z-shaped, beads (half beads).

Moreover, forming the beads into the gasket layer allows for this gasket layer to be produced independent from the intermediate layer, especially by embossment or other manners of mechanical deformation, and that the gasket layer to be afterwards attached to the intermediate plate. This allows for an especially simple and most precise production of the hydraulic control plate.

It is especially preferred that the at least one intermediate layer possesses a higher resistance against deformation than the at least one gasket layer. Resistance against deformation in particular signifies the resistance of a layer towards bending, which resistance is characterized by the choice of the material and the moment of inertia of the respective layer. A higher moment of inertia results from a higher thickness or strength of a particular layer compared to another layer.

It is especially preferred that at least one of the gasket layers is made from a resilient, spring-elastic material, especially from spring-hard steel. This enables a particularly simple integration of the beads into the gasket layers. The resiliency of the material allows for preventing a plastic deformation of the material and a thus resulting reduction of the sealing effect of the control plate for hydraulic systems. It is preferred in this respect to utilize steels with a tensile strength of at least about 1000 N/mm², preferably of at least 1200 N/mm².

It is advantageous if at least one of the gasket layers has a layer thickness (sheet thickness) of at least about 0.1 mm to at the most about 0.5 mm, more advantageous at least 0.15 to at the most about 0.3 mm and most advantageous at least 0.2 to at the most 0.25 mm. This range of thicknesses allows for an excellent deformability of the beads when in contact with a part to be sealed.

It is further preferred that the at least one intermediate plate is made from a metallic material, too. This results in a particularly stable control plate for hydraulic systems.

It is preferred that the intermediate layer in its cross section is solid, so that the sealing effect is achieved by an elastic deformation of the beads and not of the intermediate layer. It is favourable that the intermediate layer is a smooth, especially planar layer with essentially constant thickness, which only provides for through openings. This means that in a preferred embodiment, the intermediate layer shows no structure besides the through openings.

In an embodiment of the invention, the at least one intermediate layer has a thickness of at least about 0.5 mm to at the most about 5 mm, preferably of 0.8 to 3 mm, more preferably of 0.8 to 1.8 mm. This results in an intermediate layer with a high moment of inertia, thus a maximum resistance against a deformation of control plate for hydraulic systems. This prevents the sections of the beads resting against the parts to be sealed to be disconnected from the latter. It is preferred that the intermediate layer is not produced from spring-hard steel but from a material with a tensile strength of at the most about 900 N/mm², especially at the most about 750 N/mm².

It is preferred if the ratio between the thicknesses of the at least one intermediate layer and one of the gasket layers is at least about 2 to 1 and especially about 8 to 1. As a consequence the intermediate layer forms a stable support for the beads formed in the relatively thin gasket layers. This results in a pre-tension in the beads resting against the parts of the hydraulic system to be sealed.

It is moreover preferred if the ratio between the thicknesses of the at least one intermediate layer and one of the gasket layers is at the most about 40 to 1, especially 20 to 1. These values result in a flat control plate for hydraulic systems with a stable intermediate layer and resilient but durable gasket layers.

According to the invention the course of the first sealing sections and the course of the second sealing sections are offset one from the other. Offset in this respect does not mean that they are concentric to each other, but that they have an independent course. In this way it is possible to seal parts on opposite sides of the control plate which have different geometries.

In addition it is also possible that the course of the first sealing sections and the course of the second sealing sections at least in areas run in parallel, thus without offset relative to each other. If beads are used as sealing elements in both gasket layers, they then run as bead-packages in parallel through the corresponding areas of the control plate with the bead forces of the two layers reinforcing each other, meaning that they are to be considered as two springs that are in serial connection.

Furthermore, it is advantageous if at least part of the beads shows a self-contained course. These beads circularly extend about a region to be sealed, thus especially encircling a through-opening of the control plate of the hydraulic system.

It is in addition preferred that a bead extends along the outer edge of the control plate of the hydraulic system in a self-contained manner. Both laterally closed beads (full beads) and laterally open beads (half beads) can be used in this respect.

Moreover, it is preferred that at least some of the beads do not extend in a self-contained manner, resulting in the corresponding region not being encircled by a bead. Again, laterally closed beads (full beads) or laterally open beads (half beads) can be used.

A further embodiment of the invention provides for a first bead and at least a second bead in the same gasket layer to be angularly situated with respect to the course of each other - in a top-view on the control plate - and being connected to each other. The resulting structure of crossing, splitting and adjoining beads in one gasket layer enables the production of particularly complex sealing geometries.

The control plate according to the invention even allows to properly seal hydraulic systems with completely non-symmetric arrangement of the openings to be sealed which means that the pattern of holes in the control plate shows no symmetry - neither mirror nor point symmetry. This results in a non-symmetric arrangement of the beads in the respective gasket layer.

It is especially preferred that at least one of the surfaces of the gasket layer pointing away from the intermediate layer is provided at least partially - at least along sections of the course or the complete course of the bead - or completely with a plastic coating. This results in a further improvement of the sealing effect of a sealing section. The plastic coating is preferably a thermoset plastic, which shows excellent mechanical stability or an elastomeric plastic, which adapts particularly well to the surface of the part to be sealed. Foamed coatings may be applied as well.

It is further possible to also coat at least one of the surfaces of the intermediate layer which point towards the gasket layers. However, if one or both surfaces of the intermediate layer are coated, it is preferred that they are completely coated for corrosion prevention purposes. Preferred coatings used for this are metallic coatings or plastic coatings. Using a complete coating for the one or both surfaces of the intermediate layer, this intermediate layer keeps a constant thickness which is advantageous for a good sealing.

It is preferred that the at least one gasket layer and the at least one intermediate layer are locally connected to each other, locally welded to each other - e.g. by point welding - locally connected to each other in a form-locking manner or by rivets. In this way a stable connection between the gasket layer(s) and the intermediate layer(s) can be obtained which is particularly simple to manufacture.

In addition or as an alternative it is also possible that the gasket layer(s) are connected to the intermediate layer(s) by folding the edges of the former around the edges of the latter at least in sections. In order to prevent an undesirable increase in thickness, it is advantageous that the respective other gasket layer has a recess in those edge areas in which the folded-over edge of the other gasket layer abuts to opposite surface of the intermediate layer.

Further, it is preferred if the control plate for the hydraulic system comprises a plurality of through-openings for media, e.g. 10 or more through-openings for media with the through-openings for media extending through the cross-section of the gasket layer(s) and the intermediate layer(s) and the largest of the through-openings showing an extension of at the most 35 mm, preferably at the most 30 mm and most preferably of at the most 20 mm. This enables the medium to flow across the media through-openings of the control plate for hydraulic systems and the limitation of the size of the through-openings results in a sufficient stability of the control plate even in the area of these through-openings. The extension of the media through-openings is especially to be understood as the diameter of an annular through-opening or in general as the longest range of a media through-opening.

According to a further embodiment of the invention, at least one of the media through-openings is provided with a passage regulation device, especially a filter or a check valve. This allows a filtration of the medium passing the through-opening or a control of the flow.

It is moreover advantageous if the passage regulation device is fixed in the media through-opening in the intermediate layer, especially at the edge of the media through-opening or adjacent to the latter. This provides for a compact construction of the control-plate for hydraulic systems. However, the passage regulation device will be arranged in such a way that in its closed state it does not protrude beyond the surface of the intermediate layer so that the intermediate layer as such remains flat and plane.

In an advantageous manner the control-plate for hydraulic systems is designed for a maximum fluid pressure of at least about 30 bar, preferably of at least about 50 bar and most preferably of a least about 80 bar, which allows to use the control-plate as a transmission plate.

Moreover, it is favourable that the control plate is designed in such a manner that a maximum sealing gap between the sealing sections of a gasket layer and the part of the hydraulic system to be sealed by this sealing section at the predetermined maximum fluid pressure is at the most about 15 µm, preferably at the most 10 µm. This allows defining the maximum leaking steams allowable at the predetermined maximum fluid pressure.

It is especially preferable if the control plate for a hydraulic system is a transmission plate.

The invention also relates to a hydraulic system with a control plate as described above. Such a hydraulic system constitutes e.g. a transmission system, especially for a vehicle.

Further characteristics and advantages are given in the following description and representation of a preferred embodiment.

In the drawings show:
- Figure 1: a perspective view of an embodiment of a hydraulic system with a control plate
- Figure 2: a top view of a section of a first gasket layer of the control plate of the hydraulic system according to figure 1
- Figure 3: a view to the bottom of a section of a second gasket layer of the control plate of the hydraulic system according to figure 1
- Figure 4: a lateral view of the control plate of the hydraulic system according to figure 1 along the section line IV-IV in figure 2 in increased representation and
- Figure 5: a lateral view of the control plate of the hydraulic system according to figure 1 along the section line V-V in figure 2 in strongly increased representation.

Identical or functionally equivalent elements are referred to throughout all figures with identical reference numbers.

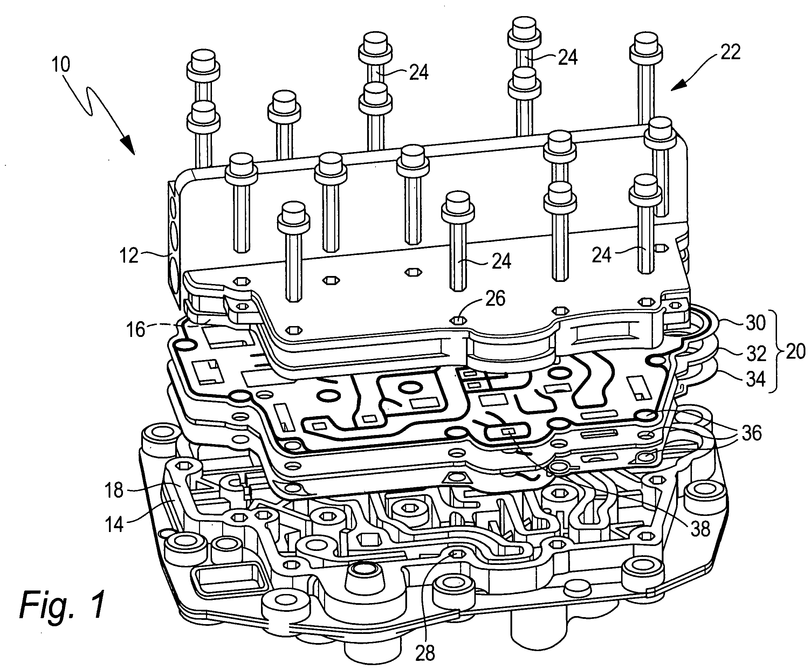

An embodiment of the hydraulic system represented in figure 1 may for instance be a transmission block of a vehicle. The hydraulic system 10 comprises a first housing part 12 and a second housing part 14. The first housing part 12 shows a first surface 16 to be sealed which points towards the second housing part 14; the second housing part 14 shows a second surface 18 to be sealed which points towards the first housing part 12.

A control plate 20 for the hydraulic system is arranged between the surfaces to be sealed, 16 and 18.

The housing parts 12 and 14 and the control plate 20 arranged between them can be connected to each other with a connecting arrangement 22. This connecting arrangement 22 produces a force which braces the housing parts 12 and 14 and the control plate 20 with each other.

The connecting arrangement 22 advantageously comprises a plurality of connecting elements 24, which are favourably screws. The first housing part 12 for example comprises guidances 26 for connecting elements, which are especially formed as cut-outs. The second housing part 14 comprises connection receptacles 28, which are especially given as inner threads. Typical line pressures used for the installation of the control plate are at least 8 N/mm, preferably at least 10N/mm, these line pressures allow for a sufficient sealing.

The control plate for hydraulic systems 20 is multi-layered and comprises a first gasket layer 30, which interacts with the first surface 16 to be sealed of the first housing parts 12. On the side of the first gasket layer 30 facing away from the first surface to be sealed 16, an intermediate layer 32 is arranged. The control plate 20 further comprises a second gasket layer 34, which is arranged on the side of the intermediate layer 32 opposite to the first gasket layer 30, and which interacts with the second surface 18 to be sealed of the second housing part 14.

The gasket layer 30 and 34 and the intermediate layer show through-openings 36 for fastening means which are flush and through which the connection means 24 reach.

In addition the gasket layers 30 and 34 as well as the intermediate layer provide media trough openings which are flush and which allow a medium to pass through the control plate 20. The medium is preferably a fluid, in particular a transmission oil.

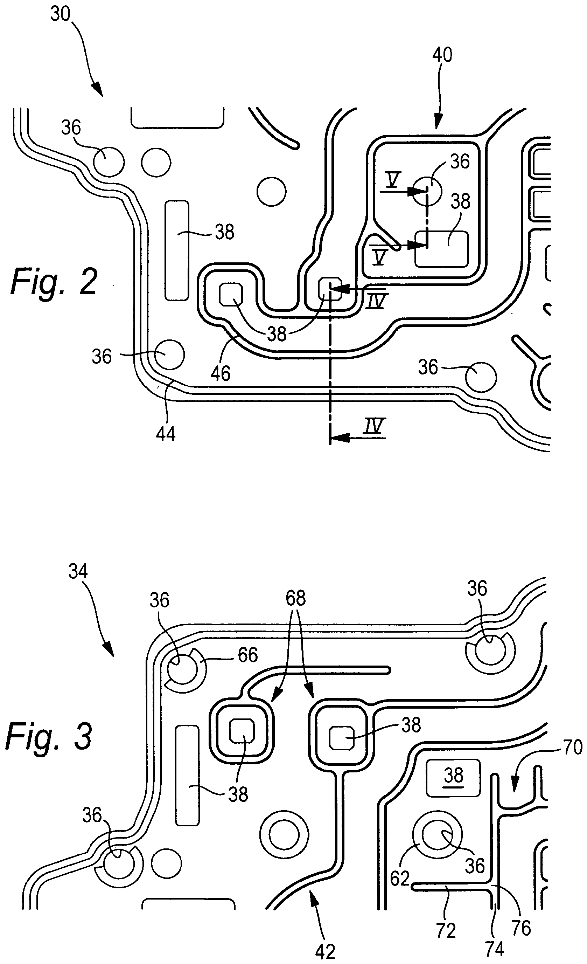

Figure 2 represents a section of the first gasket layer 30; figure 3 a corresponding section of the second gasket layer 34. The first gasket layer 30 shows first sealing sections 40, the second gasket layer 34 second sealing sections 42.

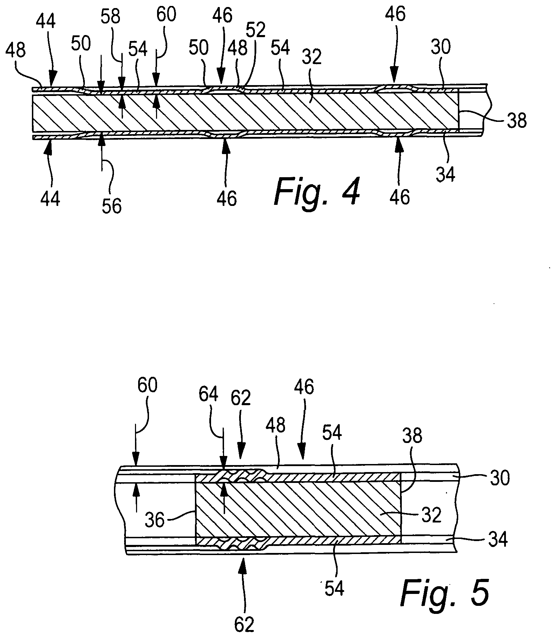

The sealing sections 40, 42 are embossed into the gasket layers 30, 34 and constitute beads. The beads are for instance formed as laterally open half-beads 44 and as laterally closed full beads 46, see also figure 4. Half beads 44 are preferably used at the outer edges of the hydraulic control plate as well as around the through-openings 36 for connection elements 24; full beads allow for a large variety of designs with extensively branched bead courses.

The half beads 44 and full beads 46 each show a solid section 48, which is distanced to the intermediate layer 32. With the half bead 44, a single solid section 48 via a single descending section 50 is supported on the intermediate layer 32. With the full bead 46 a solid material section 48 is supported via two adjacent descending sections 50, 52 being opposite to each other with respect to section 48 on the intermediate layer 32. The descending section 50 of a half bead 44 and the descending sections 50, 52 of a full bead 46 each merge with the contact sections 54, which rest against the intermediate layer 32.

A representation of the coating, especially from plastic material, has been dispensed with in favour of the clarity of the drawings. The coating is in most cases present at least on the surfaces of the gasket layers 30, 34 which point away from the intermediate layer 32, at least in the area of the beads 44, 46.

There exist several approaches for the micro sealing between the gasket layers 30, 34 and the intermediate layer 32. As an alternative to a partial coating in the area of the beads 44, 46 on the surface of the gasket layers 30, 34 pointing towards the intermediate layer 32, a complete coating of these surfaces is possible as well. In general, partial coatings are advantageous over complete coatings of the gasket layers as they can be applied in such a way that no direct contact to the media through-openings, especially the through-openings for hydraulic oil results.

It is preferable to keep a distance of at least 0.5 mm between the outer edge of the partial coating and the edge of a media through-opening 38. This ascertains that the coating does not peel off which prevents the media through-openings from being clogged. This allows but does not oblige to desist from the integration of a filter.

The coating of the beads 44, 46 advantageously extends beyond the actual bead area, the width of the coated area preferably shows up to the five-fold, most preferably up to the three and a half-fold the width of the bead. In addition, other areas of the surface of a gasket layer can be coated in sections, e.g. the environment of the through-opening 36 for connecting elements 24.

Preferably, the intermediate layer 32 and the sealing layers 30 and 34 are made from a metallic material. The intermediate layer is for instance made from steel or aluminium or an aluminium alloy. The gasket layers 30 and/or 34 are for instance made from spring steel.

It is advantageous if the thickness 56 of the intermediate layer 32 is a multiple of the thickness of the gasket layer 30 and/or 34.

The height of a bead 44, 45 results from the distance 60 between a contact section 54 pointing towards the intermediate layer 32 and the outer surface of a solid section 48 minus the thickness 58 of the gasket layer. The height of the bead is e.g. by a factor of at least about 1.5 to at the most about 3 larger than the thickness 58 of the gasket layer.

At least one of the gasket layers may dispose of supporting elements 62 in addition to the beads 44, 46, see figure 5. These supporting elements 62 are formed by structures embossed into the gasket layers 30, 34.

The supporting elements are characterized by a supporting means' height. The supporting means' height results from the distance 64 of the surface of a gasket layer 30, 34 facing the intermediate layer 32 to the outer side of the supporting element 62 minus the thickness 58 of the gasket layer. The supporting means' height is preferably smaller than the height of the bead 44, 46. It is most preferable that the supporting means' height is less than the height of the bead. The supporting elements delimit the resilient oscillation distance of a full (or half) bead 46 (44). As a consequence, the minimum distance between a first surface 16 of the first housing part 12 and a surface of the contact section 54 of the first layer 30 pointing towards the intermediate layer 32 can be restricted to the supporting means' height.

The supporting element 62 for instance shows an undulating profile with reduction of the thickness in the flanks of the profile and is preferably arranged adjacent to a through-opening 36 for fastening means. A supporting element 62 may for instance completely encircle a through-opening 36 for fastening means. The profiling with its outer contour or with single ones of its elements may follow the contour of the through-opening, thus the elements of the profiling may extend rectilinear or in a concentric manner. It is also possible that a supporting element 62 only partially surrounds a through-opening 36 for fastening means, e.g. in a half-moon shape. This allows reducing the supporting elements' demand of space. As an alternative to the undulating profiling, a cup-shaped profiling or a bead-shaped profiling meandering like a snake may be used.

Figures 4 and 5 also demonstrate that the intermediate layer is a flat layer without any structure besides the through openings.

The construction of the control plate 20 for hydraulic systems in principle allows for an arbitrary course of the sealing sections 40 and 42 formed by the beads 44, 46. At least a first subset 68 of the beads 44, 46 shows a circumferentially closed course, see figure 3. This allows annularly encircling and sealing a media through-opening 38.

A second subset 70 of the beads 44, 46 can have a circumferentially open course, see figure 3, which allows guiding a media flow along at least one of the gasket layers 30, 34.

The guidance of the media flow can be realized particularly well if a first bead 72 and a second bead 74 in a single gasket layer, in a top-view on the control plate, are arranged angularly with respect to each other and connected with each other in a transition area 76 (see figure 3). In the transition area 76, the beads 72, 74 adjoin to each other under an angle and merge with each other.

It is further possible that a part of the course of the first sealing sections 40 and a part of the course of the second sealing sections 42 show no offset relative to each other, as is for instance the case for the half bead 44 arranged along the outer edge, see figure 4. It is also possible that a part of the course of the first sealing sections 40 and at least a part of the course of the second sealing sections is arranged offset relative to each other, as is the case with the full beads 46 in the first and second gasket layer 30, 34, which are arranged in the neighbourhood to a media through opening 38, see figure 4. It is obvious from figures 2 and 3 that these offset sections are not arranged in parallel with constant distance, but that the course of the full beads 46 in the first and second gasket layer 30, 34 is independent of each other.

The layers 30, 32 and 34 of the control plate of the hydraulic system can be produced independent of each other, especially by punching and/or embossment. In the area delimiting a media through opening 38, it is preferred that it is produced without a burr or that it is deburred, which prevents flaking of a burr into a fluid streaming through this opening.

## Claims

1. Hydraulic control plate (20), comprising a first gasket layer (30) with first sealing sections (40), a second gasket layer (34) with second sealing sections (42) and at least one plane intermediate layer (32) arranged between the gasket layers (30, 34), wherein the gasket layers (30, 34) are made from a metallic material, and the sealing sections (40, 42) of said gasket layers (30, 34) comprise beads (46) embossed into the gasket layers (30, 34) which are supported on the intermediate layer (32), and wherein a part of the course of the beads of the first sealing sections (40) used for sealing a through opening (38) and a part of the course of the corresponding beads (46) of the second sealing sections (42) used for sealing said through opening (38) are offset relative to each other, thereby sealing parts on opposite sides of the control plate (20) which have different geometries.

2. Hydraulic control plate (20) according to claim 1, **characterized in that** the beads are formed as full beads and/or half beads.

3. Hydraulic control plate (20) according to claim 1 or 2, **characterized in that** the at least one intermediate layer (32) has a higher resistance against deformation than at least one of the gasket layers (30, 34).

4. Hydraulic control plate (20) according to one of the preceding claim, **characterized in that** at least one of the gasket layers (30, 34) is made from a resilient material, especially from spring-hard steel.

5. Hydraulic control plate (20) according to one of the preceding claims, **characterized in that** at least one of the gasket layers (30, 34) has a thickness of at least about 0.1 mm and at the most about 0.5 mm.

6. Hydraulic control plate (20) according to one of the preceding claims, **characterized in that** the at least one intermediate layer is made from a metallic material.

7. Hydraulic control plate (20) according to one of the preceding claims, **characterized in that** the at least one intermediate layer (32) has a layer thickness (56) of at least about 0.5 mm and at the most about 5 mm, preferably at least about 0.8 mm and at the most about 3 mm.

8. Hydraulic control plate (20) according to one of the preceding claims, **characterized in that** the ratio between the thickness (56) of the at least one intermediate layer (32) and the thickness (58) of a gasket layer (30, 34) is at least about 2 to 1, preferably at least about 8 to 1.

9. Hydraulic control plate (20) according to one of the preceding claims, **characterized in that** the ratio between the thickness (56) of the at least one intermediate layer (32) and the thickness (58) of a gasket layer (30, 34) is at the most about 40 to 1, preferably at the most about 20 to 1.

10. Hydraulic control plate (20) according to one of the preceding claims, **characterized in that** a part of the course of the first sealing sections (40) and a part of the course of the second sealing sections (42) have no offset relative to each other.

11. Hydraulic control plate (20) according to one of the preceding claims, **characterized in that** at least a subset (68) of the beads (46) have a circumferentially closed course.

12. Hydraulic control plate (20) according to one of the preceding claims, **characterized in that** at least a subset (70) of the beads (46) have a circumferentially open course.

13. Hydraulic control plate (20) according to one of the preceding claims, **characterized in that** at least a first bead (72) and at least a second bead (74) of a gasket layer (30, 34) are arranged under an angle and are connected to each other in a transition area (76).

14. Hydraulic control plate (20) according to one of the preceding claims, **characterized in that** at least one surface of at least one gasket layer (30, 34) pointing away from the intermediate layer (32) is at least partially covered with a plastic coating, in particular that the beads (46) on this surface along at least part of their course are covered with a plastic coating.

15. Hydraulic control plate (20) according to one of the preceding claims, **characterized in that** at least one of the gasket layers (30, 34) and the at least one intermediate layer (32) are locally connected to each other, preferably by welding and/or form-locking connecting or by riveting.

16. Hydraulic control plate (20) according to one of the preceding claims, **characterized in that** it constitutes a transmission plate of a vehicle.

17. Hydraulic control plate (20) according to one of the preceding claims, **characterized by** a plurality of media through openings (36) which cross the gasket layers (30, 34) and the at least one intermediate layer (32), wherein the largest of the media through-openings (36) has a maximum extension of 35 mm, preferably 30 mm.

18. Hydraulic control plate (20) according to one of the preceding claims, **characterized in that** at least one media through-opening (36) is provided with a passage regulation device, especially a filter or a check valve.

19. Hydraulic control plate (20) according to claim 18, **characterized in that** the passage regulation device is fixed in the media through-opening (36) of the intermediate layer (32).

20. Hydraulic control plate (20) according to one of the preceding claims, **characterized in that** it is designed in such a way that a maximum sealing gap between the sealing sections (40, 42) of a gasket layer (30, 34) and a part (12, 14) of the hydraulic system (10) to be sealed by means of these sealing sections (40, 42) at a predetermined maximum fluid pressure is at the most about 15 micrometer, preferably at the most about 10 micrometer.

21. Hydraulic system (10) with a hydraulic control plate (20) according to one of the preceding claims.

## Patentansprüche

1. Hydrauliksystemsteuerplatte (20), umfassend eine erste Dichtungslage (30) mit ersten Dichtabschnitten (40), eine zweite Dichtungslage (34) mit zweiten Dichtabschnitten (42) und mindestens eine zwischen den Dichtungslagen (30, 34) angeordnete Zwischenlage (32), wobei die Dichtungslagen aus einem metallischen Werkstoff hergestellt sind und die Dichtabschnitte (40, 42) der Dichtungslagen (30, 24) auf der Zwischenlage (32) abgestützte in die Dichtungslagen (30, 34) eingeprägte Sicken (46) umfassen, und wobei ein Teil des Verlaufs der Sicken der ersten Dichtabschnitte (40), die für die Abdichtung einer Durchgangsöffnung (38) verwendet werden, und ein Teil des Verlaufs der entsprechenden Sicken (46) der zweiten Dichtabschnitte (42), die für die Abdichtung der Durchgangsöffnung (38) verwendet werden, relativ zueinander versetzt sind, wodurch Teile auf gegenüberliegenden Seiten der Steuerplatte (20), die unterschiedliche Geometrien aufweisen, abgedichtet werden.

2. Hydrauliksystemsteuerplatte (20) nach Anspruch 1, **dadurch gekennzeichnet, dass** die Sicken als Vollsicken und/oder Halbsicken ausgebildet sind.

3. Hydrauliksystemsteuerplatte (20) nach Anspruch 1 oder 2, **dadurch gekennzeichnet, dass** die mindestens eine Zwischenlage (32) einen höheren Verformungswiderstand als mindestens eine der Dichtungslagen (30,34) aufweist.

4. Hydrauliksystemsteuerplatte (20) nach einem der vorhergehenden Ansprüche, **dadurch gekennzeichnet, dass** mindestens eine der Dichtungslagen (30, 34) aus einem elastischen Werkstoff, insbesondere aus federhartem Stahl, hergestellt ist.

5. Hydrauliksystemsteuerplatte (20) nach einem der vorhergehenden Ansprüche, **dadurch gekennzeichnet, dass** mindestens eine der Dichtungslagen (30, 34) eine Stärke von mindestens etwa 0,1 mm und von höchstens etwa 0,5 mm aufweist.

6. Hydrauliksystemsteuerplatte (20) nach einem der vorhergehenden Ansprüche, **dadurch gekennzeichnet, dass** die mindestens eine Zwischenlage aus einem metallischen Werkstoff hergestellt ist.

7. Hydrauliksystemsteuerplatte (20) nach einem der vorhergehenden Ansprüche, **dadurch gekennzeichnet, dass** die mindestens eine Zwischenlage (32) eine Lagenstärke (56) von mindestens etwa 0,5 mm und höchstens etwa 5 mm, bevorzugt von mindestens etwa 0,8 mm und höchstens etwa 3 mm, aufweist.

8. Hydrauliksystemsteuerplatte (20) nach einem der vorhergehenden Ansprüche, **dadurch gekennzeichnet, dass** das Verhältnis zwischen der Stärke (56) der mindestens einen Zwischenlage (32) und der Stärke (58) einer Dichtungslage (30, 34) mindestens etwa 2 zu 1, bevorzugt mindestens etwa 8 zu 1, beträgt.

9. Hydrauliksystemsteuerplatte (20) nach einem der vorhergehenden Ansprüche, **dadurch gekennzeichnet, dass** das Verhältnis zwischen der Stärke (56) der mindestens einen Zwischenlage (32) und der Stärke (58) einer Dichtungslage (30, 34) höchstens etwa 40 zu 1, bevorzugt höchstens etwa 20 zu 1, beträgt.

10. Hydrauliksystemsteuerplatte (20) nach einem der vorhergehenden Ansprüche, **dadurch gekennzeichnet, dass** ein Teil des Verlaufs der ersten Dichtabschnitte (40) und ein Teil des Verlaufs der zweiten Dichtabschnitte (42) relativ zueinander keinen Versatz aufweisen.

11. Hydrauliksystemsteuerplatte (20) nach einem der vorhergehenden Ansprüche, **dadurch gekennzeichnet, dass** mindestens eine Teilmenge (68) der Sicken (46) einen umfangsseitig geschlossenen Verlauf aufweist.

12. Hydrauliksystemsteuerplatte (20) nach einem der vorhergehenden Ansprüche, **dadurch gekennzeichnet, dass** mindestens eine Teilmenge (70) der Sicken (46) einen umfangsseitig offenen Verlauf aufweist.

13. Hydrauliksystemsteuerplatte (20) nach einem der vorhergehenden Ansprüche, **dadurch gekennzeichnet, dass** mindestens eine erste Sicke (72) und mindestens eine zweite Sicke (74) einer Dichtungslage (30, 34) zueinander winklig angeordnet und in einem Übergangsbereich (76) miteinander verbunden sind.

14. Hydrauliksystemsteuerplatte (20) nach einem der vorhergehenden Ansprüche, **dadurch gekennzeichnet, dass** mindestens eine von der Zwischenlage (32) abgewandte Oberfläche mindestens einer Dichtungslage (30, 34) zumindest teilweise mit einer Kunststoffbeschichtung versehen ist, insbesondere dass die Sicken (44, 46) auf dieser Oberfläche entlang mindestens eines Teils ihres Verlaufs mit einer Kunststoffbeschichtung versehen sind.

15. Hydrauliksystemsteuerplatte (20) nach einem der vorhergehenden Ansprüche, **dadurch gekennzeichnet, dass** mindestens eine der Dichtungslagen (30, 34) und die mindestens eine Zwischenlage (32) lokal miteinander verbunden sind, bevorzugt durch Verschweißen und/oder formschlüssige Verbindung oder durch Vernieten.

16. Hydrauliksystemsteuerplatte (20) nach einem der vorhergehenden Ansprüche, **dadurch gekennzeichnet, dass** sie eine Getriebeplatte eines Fahrzeugs bildet.

17. Hydrauliksystemsteuerplatte (20) nach einem der vorhergehenden Ansprüche, **gekennzeichnet durch** mehrere Mediendurchgangsöffnungen (36), welche durch die Dichtungslagen (30, 34) und die mindestens eine Zwischenlage (32) hindurchreichen, wobei die größte der Mediendurchgangsöffnungen (36) eine maximale Erstreckung von 35 mm, bevorzugt von 30 mm, aufweist.

18. Hydrauliksystemsteuerplatte (20) nach einem der vorhergehenden Ansprüche, **dadurch gekennzeichnet, dass** mindestens eine Mediendurchgangsöffnung (36) mit einer Durchlassregelvorrichtung, bevorzugt einem Filter oder einem Rückschlagventil, versehen ist.

19. Hydrauliksystemsteuerplatte (20) nach Anspruch 18, **dadurch gekennzeichnet, dass** die Durchlassregelvorrichtung in der Mediendurchgangsöffnung (36) der Zwischenlage (32) fixiert ist.

20. Hydrauliksystemsteuerplatte (20) nach einem der vorhergehenden Ansprüche, **dadurch gekennzeichnet, dass** sie derart ausgelegt ist, dass ein maximaler Dichtspalt zwischen den Dichtabschnitten (40, 42) einer Dichtungslage (30, 34) und einem mittels dieser Dichtabschnitte (40, 42) abzudichtenden Teil (12, 14) des Hydrauliksystems (10) bei einem vorbestimmten maximalen Fluiddruck maximal etwa 15 Mikrometer, bevorzugt maximal etwa 10 Mikrometer, beträgt.

21. Hydrauliksystem (10) mit einer Hydrauliksystemsteuerplatte (20) nach einem der vorhergehenden Ansprüche.

## Revendications

1. Plaque de commande hydraulique (20) comprenant une première couche de joint (30) avec des premières sections d'étanchéité (40), une seconde couche de joint (34) avec des secondes sections d'étanchéité (42) et au moins une couche intermédiaire plane (32) agencée entre les couches de joint (30, 34), dans laquelle les couches de joint (30, 34) sont réalisées à partir d'un matériau métallique, et les sections d'étanchéité (40, 42) desdites couches de joint (30, 34) comprennent des bourrelets (46) en relief dans les couches de joint (30, 34), qui sont supportés sur la couche intermédiaire (32), et dans laquelle une partie de la trajectoire des bourrelets des premières sections d'étanchéité (40) utilisées pour sceller une ouverture débouchante (38) et une partie de la trajectoire des bourrelets (46) correspondants des secondes sections d'étanchéité (42) utilisées pour sceller ladite ouverture débouchante (38), sont décalées l'une par rapport à l'autre, scellant ainsi des parties sur les côtés opposés de la plaque de commande (20) qui ont des géométries différentes.

2. Plaque de commande hydraulique (20) selon la revendication 1, **caractérisée en ce que** les bourrelets sont formés comme des bourrelets complets et/ou des demi-bourrelets.

3. Plaque de commande hydraulique (20) selon la revendication 1 ou 2, **caractérisée en ce que** la au moins une couche intermédiaire (32) a une résistance supérieure à la déformation à au moins l'une des couches de joint (30, 34).

4. Plaque de commande hydraulique (20) selon l'une des revendications précédentes, **caractérisée en ce qu'**au moins l'une des couches de joint (30, 34) est réalisée à partir d'un matériau résilient, en particulier de l'acier à ressort.

5. Plaque de commande hydraulique (20) selon l'une des revendications précédentes, **caractérisée en ce qu'**au l'une des couches de joint (30, 34) a une épaisseur d'au moins environ 0,1 mm et au maximum d'environ 0,5 mm.

6. Plaque de commande hydraulique (20) selon l'une des revendications précédentes, **caractérisée en ce que** la au moins une couche intermédiaire est réalisée à partir d'un matériau métallique.

7. Plaque de commande hydraulique (20) selon l'une des revendications précédentes, **caractérisée en ce que** la au moins une couche intermédiaire (32) a une épaisseur de couche (56) d'au moins environ 0,5 mm et au maximum d'environ 5 mm, de préférence d'au moins environ 0,8 mm et au maximum d'environ 3 mm.

8. Plaque de commande hydraulique (20) selon l'une des revendications précédentes, **caractérisée en ce que** le rapport entre l'épaisseur (56) de la au moins une couche intermédiaire (32) et l'épaisseur (58) d'une couche de joint (30, 34) est au moins d'environ 2 sur 1, de préférence au moins d'environ 8 sur 1.

9. Plaque de commande hydraulique (20) selon l'une des revendications précédentes, **caractérisée en ce que** le rapport entre l'épaisseur (56) de la au moins une couche intermédiaire (32) et l'épaisseur (58) d'une couche de joint (30, 34) est au maximum d'environ 40 sur 1, de préférence au maximum d'environ 20 sur 1.

10. Plaque de commande hydraulique (20) selon l'une des revendications précédentes, **caractérisée en ce qu'**une partie de la trajectoire des premières sections d'étanchéité (40) et une partie de la trajectoire des secondes sections d'étanchéité (42) n'ont pas de décalage l'une par rapport à l'autre.

11. Plaque de commande hydraulique (20) selon l'une des revendications précédentes, **caractérisée en ce qu'**au moins un sous-ensemble (68) des bourrelets (46) a une trajectoire circonférentiellement fermée.

12. Plaque de commande hydraulique (20) selon l'une des revendications précédentes, **caractérisée en ce qu'**au moins un sous-ensemble (70) des bourrelets (46) a une trajectoire circonférentiellement ouverte.

13. Plaque de commande hydraulique (20) selon l'une des revendications précédentes, **caractérisée en ce qu'**au moins un premier bourrelet (72) et au moins un second bourrelet (74) d'une couche de joint (30, 34) sont agencés sous un angle et sont raccordés entre eux dans une zone de transition (76).

14. Plaque de commande hydraulique (20) selon l'une des revendications précédentes, **caractérisée en ce qu'**au moins une surface d'au moins une couche de joint (30, 40) orientée à distance de la couche intermédiaire (32) est au moins partiellement recouverte avec un revêtement en plastique, en particulier **en ce que** les bourrelets (46) sur cette surface le long d'au moins une partie de leur trajectoire sont recouverts avec un revêtement en plastique.

15. Plaque de commande hydraulique (20) selon l'une des revendications précédentes, **caractérisée en ce qu'**au moins l'une des couches de joint (30, 34) et la au moins une couche intermédiaire (32) sont raccordées localement entre elles, de préférence par soudage et/ou raccordement par verrouillage de forme ou par rivetage.

16. Plaque de commande hydraulique (20) selon l'une des revendications précédentes, **caractérisée en ce qu'**elle constitue une plaque de transmission d'un véhicule.

17. Plaque de commande hydraulique (20) selon l'une des revendications précédentes, **caractérisée par** une pluralité d'ouvertures débouchantes de support (36) qui traversent les couches de joint (30, 34) et la au moins une couche intermédiaire (32), dans laquelle la plus grande des ouvertures débouchantes de support (36) a une extension maximum de 35 mm, de préférence 30 mm.

18. Plaque de commande hydraulique (20) selon l'une des revendications précédentes, **caractérisée en ce qu'**au moins une ouverture débouchante de support (36) est prévue avec un dispositif de régulation de passage, en particulier un filtre ou une valve anti-retour.

19. Plaque de commande hydraulique (20) selon la revendication 18, **caractérisée en ce que** le dispositif de régulation de passage est fixé dans l'ouverture débouchante de support (36) de la couche intermédiaire (32).

20. Plaque de commande hydraulique (20) selon l'une des revendications précédentes, **caractérisée en ce qu'**elle est conçue de sorte qu'un espace d'étanchéité maximum entre les sections d'étanchéité (40, 42) d'une couche de joint (30, 34) et une partie (12, 14) du système hydraulique (10) à sceller au moyen de ces sections d'étanchéité (40, 42) à une pression de fluide maximum prédéterminée est au maximum d'environ 15 micromètres, de préférence au maximum d'environ 10 micromètres.

21. Système hydraulique (10) avec une plaque de commande hydraulique (20) selon l'une des revendications précédentes.
